# EUROPÄISCHE PATENTSCHRIFT

(11) **EP 4 188 579 B1**
(45) Veröffentlichungstag und Bekanntmachung des Hinweises auf die Patenterteilung: **10.07.2024**
(21) Anmeldenummer: 21759255.9
(22) Anmeldetag: 30.07.2021
(51) Int. Cl.: B01D 46/00, B01D 46/10, B01D 46/24, B01D 46/52

(54) **FILTERELEMENT MIT ZICKZACKFÖRMIG GEFALTETEM FILTERMEDIUM MIT DISKONTINUIERLICHER STIRNKANTENVERKLEBUNG SOWIE VERFAHREN ZUM HERSTELLEN EINES SOLCHEN**
FILTER ELEMENT COMPRISING A FILTER MEDIUM FOLDED IN A ZIG-ZAG-SHAPE WITH DISCONTINUOUS END-EDGE BONDING, AND METHOD FOR PRODUCING SAME
ÉLÉMENT FILTRANT COMPRENANT UN MILIEU FILTRANT PLIÉ EN ZIGZAG À LIAISON D'EXTRÉMITÉ DISCONTINUE, ET SON PROCÉDÉ DE PRODUCTION

(30) Priorität: 31.07.2020 DE 102020120247
(43) Veröffentlichungstag der Anmeldung: 07.06.2023
(73) Patentinhaber: MANN+HUMMEL GmbH, 71636 Ludwigsburg (DE)
(72) Erfinder: SCHMID, Daniel, 74343 Sachsenheim (DE); DIRNBERGER, Timo, 71672 Marbach (DE); WEBER, Andreas, 71691 Freiberg (DE); SCHMIDL, Markus, 94431 Pilsting (DE); GOLDBRUNNER, Christoph, 84130 Dingolfing (DE); DONAUER, Nadine, 70736 Fellbach (DE); HETTKAMP, Philipp, 71711 Steinheim (DE); LEHMANN, Dr. Martin, 76137 Karlsruhe (DE); WAGNER, Markus, 94424 Arnstorf (DE)
(74) Vertreter: Mann + Hummel Intellectual Property
(86) Internationale Anmeldenummer: PCT/EP2021/071361
(87) Internationale Veröffentlichungsnummer: WO 2022/023512

(56) Entgegenhaltungen:
- DE-A1- 102016 217 458
- DE-A1- 102017 003 997
- DE-A1- 3 622 955
- JP-U- H0 220 774
- US-A1- 2018 207 566

## Beschreibung

### Technisches Gebiet

Die Erfindung betrifft ein Filterelement zum Filtern eines Fluids, insbesondere Luft, mit einem zickzackförmig gefalteten Filtermedium, das zur Abdichtung seiner Faltenenden mit einer Stirnkantenverklebung versehen ist. Darüber hinaus betrifft die Erfindung ein Verfahren zum Herstellen eines solchen Filterelements.

### Stand der Technik

Die Ansaugluft von Verbrennungsmotoren wird vor dem Eintritt in den Motor üblicherweise durch einen Luftfilter mit einem Filtergehäuse und einem darin angeordneten Filterelement geleitet, um in der Ansaugluft enthaltene Schmutzpartikel aus der Ansaugluft abzuscheiden. Ein derartiger Luftfilter ist beispielsweise aus der DE 102 31 696 A1 bekannt geworden. Das Filterelement weist die Form eines flachen Quaders auf und umfasst ein Filtermedium aus Papier oder Filtervlies, das zickzackförmig gefaltet ist. Die Falze auf der einen Seite des Filtermediums begrenzen eine Hauptfilterfläche für die Rohluftseite des Filterelements und die in der Parallelebene liegenden Falze der gegenüberliegenden Seite des Filterelements begrenzen die Filterfläche für die Reinluftseite. Eine erforderliche Abdichtung der Faltenenden des Filtermediums wird mittels einer sogenannten Stirnkantenverklebung erreicht, die beispielsweise durch Auftrag einer Schmelzkleberraupe auf dem Filtermedium, Sprühverklebung, PUR-Schaumapplikation oder eine sogenannte Seitenbandverklebung realisiert werden kann.

Aus DE 10 2016 217 458 A1 ist ein trapezförmiger oder dreieckiger Luftfiltereinsatz mit einem zickzackförmig gefalteten Filtermaterial bekannt, der keine parallelen Seitenränder aufweist, sondern sich in eine Richtung verjüngt. Im Bereich der Seitenränder verlaufen abdichtende Klebstoffspuren orthogonal zu Faltachsen und in axialer Richtung zueinander versetzt. Benachbarte Klebstoffspuren verkleben keine gemeinsamen Falten, sondern können an einem konvexen Faltungsscheitel aneinander grenzender Falten enden.

US 2018/0207566 A1 beschreibt einen Filter mit einem zu tiefen Falten gefalteten Filtermedium, wobei die Falten durch Klebstoffraupen voneinander beabstandet gehalten werden können. Einander gegenüberliegende radiale Außenseiten können durch eine umlaufende Klebstoffraupe abgedichtet sein, die einem gekrümmten Verlauf der Außenseiten folgt.

Die zickzackförmig gefalteten Filtermedien werden zumeist aus einem Filtermediumzuschnitt gefertigt. Wird eine Kleberraube zur Bildung der Stirnkantenverklebung eingesetzt, so wird der Filtermediumzuschnitt in der Regel zunächst vorgefaltet und nachfolgend wieder entfaltet, um diesen dann an entlang seiner beiden einander gegenüberliegenden Längsseiten, die die Stirnkanten der späteren Falten bilden, mit der Klebstoffraupe zu versehen. Nach dem erneuten Aufstellen (d. h. Falten) des Filtermediumzuschnitts kann so die Stirnkantenverklebung gebildet werden.

In der Praxis müssen die Filterelemente mitunter eine Formgebung aufweisen, die von der klassischen - streng quaderförmigen oder streng kreiszylindrischen - Bauform abweicht. Dadurch kann beispielsweise der für das Filterelement zur Verfügung stehende Einbauraum eines zur Aufnahme des Filterelements vorgesehenen Filtergehäuses umfassend genutzt werden. Weist das Filterelement bzw. sein aus dem Filtermedium gebildeter Filterkörper beispielsweise eine Außenkontur mit ein oder mehreren Rücksprüngen, wie beispielsweise Stufen, Schrägen oder Einbuchtungen, auf, so wird die vorgenannte Stirnkantenverklebung im Wege eines Klebstoffraupenauftrags erschwert. So erfordert der Klebstoffauftrag auf dem Filtermediumzuschnitt entlang einer dem Rücksprung folgenden nicht-lineareren und/oder bezogen auf die Bewegungsachse, entlang derer der Filtermediumzuschnitt und die Klebstoffauftragseinrichtung während des Klebstoffauftrags bewegt werden, schräg verlaufenden Klebstoffauftragsbahn, den Einsatz zweidimensional hochdynamisch bewegbarer Klebstoffauftragseinrichtungen, die komplex, verschleiß- und störungsanfällig und daher teuer sind.

Die Massenfertigung von Filterelementen erfordert, dass die Filterelementzuschnitte und eine jeweilig eingesetzte Klebstoffauftragseinrichtung mit großer Geschwindigkeit relativ zueinander bewegt werden, was mit den vorgenannten bewegbaren Klebstoffauftragseinrichtungen in der Regel nicht abgebildet werden kann. Darüber hinaus ist zu beachten, dass die Klebstoffauftragsbahn entlang der den Rücksprung aufweisenden Längsseite des Filtermediumzuschnitts einen maximalen Winkel relativ zur Auftragsrichtung bzw. Längserstreckung des Filtermediumzuschnitts nicht überschreiten darf, damit sich die Klebstoffraupenabschnitte oder Klebstoffauftragssegmente an einander gegenüberliegenden Flanken der zu bildenden Falten des Filtermediums beim Aufstellen des Filtermediumzuschnitts aneinander anlegen und miteinander fluiddicht verbinden können. Andernfalls kann es zu Undichtigkeiten und somit zu einer erhöhten Ausschussrate bei der Produktion der Filterelemente kommen.

Es ist deshalb die Aufgabe der Erfindung, ein eingangs genanntes Filterelement mit guter Filterflächennutzung bereitzustellen, das mit einfachen technischen Mitteln kostengünstig in Massenfertigung und zugleich mit möglichst kleiner Ausschussrate herzustellen ist. Darüber hinaus soll ein Verfahren zum Fertigen eines solchen Filterelements angegeben werden.

### Offenbarung der Erfindung

Die das Filterelement betreffende Aufgabe wird erfindungsgemäß durch ein Filterelement mit den in Anspruch 1 angegebenen Merkmalen gelöst. Das erfindungsgemäße Verfahren zum Herstellen eines solchen Filterelements ist in Anspruch 14 angegeben. Bevorzugte Weiterbildungen der Erfindung sind in den Unteransprüchen sowie in der Beschreibung angegeben.

Das erfindungsgemäße Filterelement dient dem Filtern eines Fluids, insbesondere von Luft, insbesondere der Ansaugluft eines Verbrennungsmotors oder auch der Frischluft für den Fahrzeuginnenraum eines Kraftfahrzeugs, Schienenfahrzeugs oder dergleichen. Das Filterelement weist ein zickzackförmig gefaltetes Filtermedium auf, das zur Abdichtung seiner Faltenenden mit einer Stirnkantenverklebung versehen ist. Erfindungsgemäß ist die Stirnkantenverklebung im Bereich eines Rücksprungs der Außenkontur des Filtermediums diskontinuierlich ausgeführt; mit anderen Worten weist die Stirnkantenverklebung Unterbrechungen im Verlauf der Stirnkantenverklebung auf oder besteht aus mehreren separat ausgebildeten Klebespurabschnitten. Anschaulich beschrieben erfolgt die Herstellung der Stirnkantenverklebung mittels eines Prozesses mit zeitlichen und/oder räumlichen Unterbrechungen. Die Falten des Filterelements erstrecken sich in Faltenrichtung zwischen zwei gegenüberliegenden Längsseiten. Quer zur Faltenrichtung folgen die Falten zwischen zwei gegenüberliegenden Stirnseiten aufeinander.

Die Stirnkantenverklebung umfasst dabei zumindest ein in Faltenrichtung außenliegend, d. h. benachbart zu einer Längsseite angeordnetes erstes Verklebungssegment. Vorzugsweise folgt das erste Verklebungssegment der Außenkontur des Faltenbalges in Querrichtung zur Faltenrichtung, insbesondere geradlinig. Das erste Verklebungssegment ist im Bereich eines Rücksprungs vorzugsweise diskontinuierlich ausgebildet. Weiterhin umfasst die Stirnkantenverklebung wenigstens ein in Faltenrichtung innenliegend angeordnetes zweites Verklebungssegment, wobei das zweite Verklebungssegment in Querrichtung zur Faltenrichtung zum ersten Verklebungssegment beabstandet angeordnet ist und wobei die beiden Verklebungssegmente mindestens eine gemeinsame Falte verkleben. Die Verklebungssegmente sind mithin in Richtung der Falten voneinander beabstandet angeordnet und berühren einander typischerweise nicht. Die Verklebungssegmente sind mit anderen Worten in Faltenrichtung und in Querrichtung zur Faltenrichtung voneinander beabstandet, wobei in der Querrichtung zur Faltenrichtung insbesondere Endpunkte der Verklebungssegmente voneinander beabstandet sind. Eine Falte im Sinne der Erfindung ist hierbei ein Bereich des Filtermediums, welcher reinseitig von Faltenspitze zu Faltenspitze verläuft und somit in der Abfolge eine Faltenspitze, ein Faltental und eine weitere, zweite Faltenspitze umfasst. Für den Fall, dass das Filtermedium einen innenliegenden Ausschnitt aufweist muss die Stirnkantenverklebung quer zur Faltenrichtung mindestens die Falte, die von dem Ausschnitt angeschnitten ist, vollständig verkleben. Quer zur Faltenrichtung müssen anschaulich also beide Spitzen, die die Falte auf der Reinseite bilden, verklebt sein.

Im Gegensatz zu einer unterbrechungsfrei ausgeführten Stirnkantenverklebung kann dadurch die Fertigung des Filterelements prozesstechnisch vereinfacht und insgesamt kostengünstiger realisiert werden. Insbesondere erübrigt sich der Einsatz der vorgenannten hochdynamischen Klebstoffauftragseinrichtung. Stattdessen kann der Klebstoff mit geringem technischen Aufwand, beispielsweise mittels einer herkömmlichen Klebstoffauftragseinrichtung mit mehreren ortsfest angeordneten Auftragsdüsen, auf dem Filtermediumzuschnitt aufgebracht werden. Darüber hinaus kann durch die diskontinuierlich ausgeführte Stirnkantenverklebung eine große funktionell nutzbare Filterfläche des Filterkörpers realisiert werden.

Die Dichtwirkung der Stirnkantenverklebung wird grundsätzlich nur gemeinsam durch deren erstes und zweites Verklebungssegment erreicht. Das erste Verklebungssegment alleine genügt nicht, um die Stirnkanten an einer Längsseite des Filterkörpers abzudichten.

Klebstoff im Sinne der Erfindung ist ein nichtmetallischer Stoff, der Werkstoffe durch Oberflächenhaftung (Adhäsion) so verbinden kann, dass die Verbindung eine ausreichende innere Festigkeit (Kohäsion) besitzt. Bevorzugt basiert der Klebstoff auf einer oder mehreren organischen Verbindungen. Besonders bevorzugt ist der Klebstoff ein Schmelzklebstoff (auch Hotmelt genannt), wobei der Schmelzklebstoff ein thermisch aufschmelzbares Klebstoffsystem ist, welches durch Abkühlung Kohäsion (innere Festigkeit) entwickelt. Schmelzklebstoffe können thermoplastisch oder reaktiv sein. Thermoplastische Schmelzklebstoffe lassen sich reversibel aufschmelzen. Reaktive Schmelzklebstoffe zeigen während oder nach der Abkühlung chemische Vernetzungsreaktionen. Geeignete Basispolymere für Schmelzklebstoffe umfassen Polyamide (PA), Polyethylen (PE), Amorphe Polyalphaolefine, Ethylenvinylacetat-(Co)polymere (EVAC), Polyester-Elastomere (TPE-E), Polyurethan-Elastomere (TPE-U), Copolyamid-Elastomere (TPEA), und Vinylpyrrolidon/Vinylacetat-Copolymere.

Der Rücksprung der Außenkontur des Filtermediums kann erfindungsgemäß als eine Stufe, eine Schräge, eine Abrundung oder als eine Einbuchtung ausgeführt sein. Unter einer Einbuchtung wird vorliegend eine eckige oder in Richtung des jeweilig gegenüberliegenden Randabschnitts konkav gewölbte Vertiefung des Randabschnitts des Filtermediums verstanden. Im Falle der Einbuchtung ist das zweite Verklebungssegment mit seinen beiden Endabschnitten beiderseitig der Einbuchtung (in Richtung der mit der Stirnkantenverklebung versehenen Längsseite) jeweils quer zur Faltenrichtung die Stirnkantenverklebung zu einem ersten Verklebungssegment der Stirnkantenverklebung überlappend angeordnet. Zur Ausbildung des Rücksprungs, insbesondere einer Einbuchtung oder Abrundung, kann die Außenkontur zumindest bereichsweise gekrümmt verlaufen - für eine Einbuchtung wie oben erwähnt konkav; für eine Abrundung konvex gekrümmt. Ist der Rücksprung in einem Eckbereich des Filterkörpers ausgebildet, so genügt hier eine einseitige Überlappung des zweiten Verklebungssegments mit dem ersten Verklebungssegment. Zu beachten ist, dass also jedes zweite Verklebungssegment den Rücksprung quer zur Faltenrichtung zumindest teilweise, im Falle eines einzigen zweiten Verklebungssegments vollständig, überdeckt.

Das Filterelement kann erfindungsgemäß mit einer Durchgangsausnehmung und oder mit einem stirnseitigen Rücksprung versehen sein, wobei die Falten zu beiden Seiten der Durchgangsausnehmung jeweils durch eine Verklebung ihrer zur Durchgangsausnehmung bzw. dem stirnseitigen Rücksprung weisenden Stirnkanten abgedichtet sind. Auch diese Verklebung kann in einer der Stirnkantenverklebung der alten entsprechenden Weise durch einen Klebstoffauftrag mit ortsfest angeordneten Klebstoffauftragsdüsen auf einfache und kostengünstige Weise erzeugt werden.

In einer Ausführungsform folgt das erste Verklebungssegment der Außenkontur des Filterkörpers geradlinig. Das erste Verklebungssegment ist also mit anderen Worten linear folgend, insbesondere parallel zur Außenkontur angeordnet. Dies hat den Vorteil, dass eine sichere Dichtung bei wenig Klebstoffeinsatz für das erste Verklebungssegment und Bereitstellung von vorbestimmt gut ausgenutzter Filterfläche möglich ist. Auch bei einer gekrümmt verlaufenden Außenkontur kann sich das erste Verklebungssegment geradlinig quer zur Faltenrichtung erstrecken; der Abstand zwischen dem ersten Verklebungssegment und der Außenkontur variiert dann entsprechend der Krümmung der Außenkontur. In Sonderfällen kann das erste Verklebungssegment gekrümmt verlaufen, insbesondere bei einer gekrümmten Außenkontur des Filterelements. Dadurch kann die nutzbare Filterfläche weiter maximiert werden.

In einer bevorzugten Ausführungsform ist das zweite Verklebungssegment diskontinuierlich zum ersten Verklebungssegment ausgebildet. Die Anordnung weist Unterbrechungen auf; mit anderen Worten weist die Stirnkantenverklebung Unterbrechungen im Verlauf der Stirnkantenverklebung auf. Anschaulich beschrieben erfolgt die Herstellung des zweiten Verklebungssegments mittels eines Prozesses mit zeitlichen und/oder räumlichen Unterbrechungen. Dies hat den Vorteil, dass eine sichere Dichtung bei optimalem Klebstoffeinsatz und optimaler Bereitstellung von Filterfläche möglich ist. Besonders bevorzugt, verläuft das zweite Verklebungssegment quer zur Faltenrichtung hierbei geradlinig, wodurch die Vorteile noch zusätzlich optimiert werden. In Sonderfällen kann das zweite Verklebungssegment gekrümmt verlaufen. Dadurch kann das zweite Verklebungssegment im Falle eines größeren Rücksprungs dessen gekrümmtem Verlauf folgen, um die nutzbare Filterfläche weiter zu maximieren.

Das erste und/oder zweite Verklebungssegment können in sich diskontinuierlich sein. Sie können mit anderen Worten je aus mehreren voneinander separaten Abschnitten bestehen.

Alternativ ist es jedoch auch denkbar, dass das erste und/oder das zweite Verklebungssegment durchgängig ausgebildet sind. Die Diskontinuität der Stirnkantenverklebung manifestiert sich insofern in der voneinander beabstandeten Anordnung der beiden Verklebungssegmente. Grundsätzlich steht das eine Verklebungssegment quer zur Faltenrichtung zumindest einenends über das andere Verklebungssegment vor. Diese Ausführungsform eignet sich insbesondere für Filterelemente, bei denen der Rücksprung eine Abrundung ist.

In einer weiteren Ausführungsform beginnt und endet das zweite Verklebungssegment, das in Querrichtung zur Faltenrichtung zum ersten Verklebungssegment beabstandet angeordnet ist, wenigstens mit der Außenkontur des jeweiligen Rücksprungs oder beginnt und endet zu dieser Außenkontur beabstandet. Dies hat den Vorteil, dass im Bereich einer Verspannungsvorrichtung zwischen Gehäuseoberteil und Gehäuseunterteil das Filterelement stabilisierend wirkt. Hierdurch wird ein Verzug der Dichtungskonturen der Gehäuseteile beim Verspannen insbesondere in den Eckbereichen des Gehäuses zumindest reduziert oder verhindert und hierdurch die Dichtwirkung zusätzlich gesichert.

In einer weiteren Ausführungsform ist der Rücksprung der Außenkontur in einem Eckbereich des Filterkörpers angeordnet.

In einer weiteren Ausführungsform weist die Außenkontur des Filterkörpers mehrere Rücksprünge auf. In einer weiteren Ausführungsform weist das Filtermedium eine Durchgangsausnehmung auf, wobei die Falten des Filterkörpers beiderseitig der Durchgangsausnehmung zur Durchgangsausnehmung hin durch eine zusätzliche Verklebung abgedichtet sind.

Die Stirnkantenverklebung kann mehrere jeweils in Querrichtung zur Faltenrichtung voneinander beabstandete zweite Verklebungssegmente aufweisen. Paare von benachbarten zweiten Verklebungssegmenten verkleben je wenigstens eine gemeinsame Falte. Derart kann der Rücksprung stufenförmig abgedichtet werden. Dies ist insbesondere bei größeren Rücksprüngen vorteilhaft, um die nutzbare Filterfläche zu vergrößern.

Das Filterelement kann nach der Erfindung als ein sogenanntes Platten- oder Flachfilterelement oder alternativ als ein Rundfilterelement ausgeführt sein. Bei der erstgenannten Ausführungsform spannt das Filtermedium eine Filterebene auf. Bei der letztgenannten Ausführungsform ist das Filtermedium bzw. der daraus gebildete Filterkörper um die Längsachse des Filterelements ringförmig angeordnet und vorzugsweise in einer zur Längsachse radialen Richtung von dem zu filternden Fluid durchströmbar. Das Filtermedium des Rundfilterelements kann zwischen zwei Endscheiben angeordnet und kann mit den Endscheiben verklebt, verschweißt oder im Material der Endscheiben eingebettet gehalten angeordnet sein. Das Platten- bzw. Flachfilterelement kann insgesamt oder bereichsweise oval, stadionförmig oder rund sein.

Das Filterelement kann eine umlaufende, vorzugsweise reinseitig angeordnete, Dichtung aufweisen. Die reinseitige Dichtung kann an den Filterkörper beispielsweise angeklebt, angeschweißt, angeschäumt oder angespritzt sein. Die Dichtung besteht bevorzugt aus einem gummielastisch verformbaren Material. Besonders bevorzugt besteht die Dichtung aus PUR (Polyurethan), insbesondere geschlossenzelligem Polyurethanschaum. Von der Außenkontur her überdeckt die Dichtung im Bereich des Rücksprungs quer zur Faltenrichtung wenigstens eine Falte, die sowohl von dem ersten Verklebungssegment als auch von dem zweiten Verklebungssegment verklebt ist. Die Dichtung verhindert einerseits, dass Luft seitlich an dem Filterkörper vorbeiströmt. Hierzu kann die Dichtung an einem Filtergehäuse anliegen. Andererseits verhindert die Dichtung durch die Überdeckung der gemeinsam verklebten Falte, dass Luft zwischen Paaren benachbarter Verklebungssegmente in Falten einströmt, die zur Ausbildung des Rücksprungs beschnitten sind. Vorzugsweise überdeckt die Dichtung von der Außenkontur her wenigstens drei durch ein Paar von Verklebungssegmenten gemeinsam verklebte Falten. Dies ist im Hinblick auf Toleranzen des Fertigungsprozesses vorteilhaft.

Das erfindungsgemäße Verfahren zum Herstellen eines vorstehend erläuterten Filterelements umfasst die folgenden Schritte:
a) Bereitstellen eines Filtermediumzuschnitts, der zur Bildung des Filterkörpers entlang von vorgegebenen Falzlinien, die sich von einer ersten Längsseite des Filtermediumzuschnitts zu einer gegenüberliegend angeordneten zweiten Längsseite erstrecken, zickzackförmig zu falten ist;
b) Erzeugen zumindest eines Rücksprungs im Bereich eines der beiden Längsseiten des Filtermediumzuschnitts;
c) Definieren von jeweils einer ersten linearen Klebstoffauftragsbahn entlang eines jeden der beiden Längsseiten des Filtermediumzuschnitts, wobei die beiden Klebstoffauftragsbahnen zueinander parallel verlaufend angeordnet sind und eine der beiden Klebstoffauftragsbahnen den zumindest einen Rücksprung schneidet;
d) Definieren einer zweiten linearen Klebstoffauftragsbahn entlang der den Rücksprung aufweisenden Längsseite des Filtermediumzuschnitts, wobei die zweite Klebstoffauftragsbahn zwischen den beiden ersten Klebstoffauftragsbahnen und zu diesen beabstandet verlaufend angeordnet ist, ohne den Rücksprung zu schneiden;
e) Auftragen von Klebstoff auf dem Filtermediumzuschnitt entlang der beiden ersten Klebstoffauftragsbahnen, wobei der Klebstoffauftrag entlang der ersten Klebstoffauftragsbahn der Außenkontur des Filtermedienzuschnitts in Querrichtung zur Faltenrichtung folgt und im Bereich des zumindest einen Rücksprungs unterbrochen oder abgebrochen und stattdessen Klebstoff entlang der zweiten Klebstoffauftragsbahn auf dem Filtermediumzuschnitt aufgetragen wird, derart, dass der Klebstoffauftrag entlang der zweiten Klebstoffauftragsbahn in Querrichtung zur Faltenrichtung zur ersten Klebstoffauftragsbahn beabstandet aufgetragen wird und wobei die beiden Klebstoffauftragsbahnen mindestens eine gemeinsame Falte des Filtermediumzuschnitts verkleben; und
f) Aufstellen des Filtermediumzuschnitts zu einem zickzackförmig gefalteten Filtermedium, sodass die Faltenenden des Filtermediums mittels der durch den abgebundenen Klebstoffauftrag gebildeten Stirnkantenverklebung abgedichtet sind.

Durch das erfindungsgemäße Herstellungsverfahren kann das Filterelement auf einfache und kostengünstige Weise sowie mit einfachen technischen Mitteln hergestellt werden. So kann der Klebstoff mit einem nur geringen technischen Aufwand über mehrere Klebstoffauftragsdüsen auf dem Filtermediumzuschnitt aufgetragen werden, die relativ zueinander abstandsinvariant angeordnet sein können. Dadurch können die bei der Massenfertigung von Filterelementen erforderlichen großen Relativgeschwindigkeit, mit der die jeweiligen Filterelementzuschnitte an der Klebstoffauftragseinrichtung vorbeigeführt werden, ohne Weiteres realisiert werden. Es versteht sich, dass die jeweiligen Klebstoffauftragsdüsen dabei mit einem Klebstoffabgabeventil versehen sein müssen, das ein entsprechendes zeitliches Ansprechverhalten aufweist. Derlei Hochgeschwindigkeitsventile sind jedoch am Markt seit geraumer Zeit etabliert und frei verfügbar.

### Kurze Beschreibung der Zeichnungen

Die Erfindung wird nachstehend anhand von in der Zeichnung wiedergegebenen Ausführungsbeispielen näher erläutert. Die gezeigten Ausführungsformen haben für die Schilderung der Erfindung ausschließlich beispielhaften Charakter.

In der Zeichnung zeigen:
- Fig. 1: ein Plattenfilterelement mit einem Filterkörper mit einem zickzackförmig gefalteten Filtermedium, wobei der Filterkörper eine Außenkontur mit Rücksprüngen aufweist und die Falten des Filterkörpers durch eine diskontinuierliche Stirnkantenverklebung zur Längsseite hin abgedichtet sind, in einer perspektivischen Ansicht;
- Fig. 2: das Filterelement gemäß Fig. 1 in einer Draufsicht;
- Fig. 3: den Filterkörper des Filterelements gemäß Fig. 1 in einer freigestellten Draufsicht;
- Fig. 4: ein Rundfilterelement mit einem Filterkörper mit einem zickzackförmig gefalteten Filtermedium, wobei der Filterkörper eine Außenkontur mit einem Rücksprung aufweist und im Bereich des Rücksprungs mit einer diskontinuierlich ausgeführten Stirnkantenverklebung versehen ist;
- Fig. 5: das Filtermedium des Filterkörpers gemäß Fig. 4 im teilweise abgewickelten Zustand, in Draufsicht;
- Fig. 6: eine Klebstoffauftragsvorrichtung zum Auftragen von Klebstoff auf einem Filtermediumzuschnitt für ein Filterelement gemäß Fig. 1 oder 4, in Draufsicht; und
- Fig. 7: einzelne Verfahrensschritte eines erfindungsgemäßen Verfahrens zum Herstellen eines Filterelements;
- Fig. 8: ein flach-ovales nicht erfindungsgemäßes Filterelement, wobei ein Filterkörper an seiner Außenkontur Rücksprünge in Form von Abrundungen aufweist, die durch mehrere voneinander beabstandete Verklebungssegmente abgedichtet sind, in einer perspektivischen Ansicht;
- Fig. 9: den Filterkörper des nicht erfindungsgemäßen Filterelements gemäß Fig. 8 in einer freigestellten Draufsicht, wobei ein abgerundeter Verlauf der Längsseiten zu erkennen ist;
- Fig. 10: ein ähnliches nicht erfindungsgemäßes Filterelement wie in Figur 8 in einer perspektivischen Ansicht;
- Fig. 11: den Filterkörper des nicht erfindungsgemäßen Filterelements gemäß Fig. 10, wobei Längsseiten bereichsweise geradlinig ausgebildet sind, in einer freigestellten Draufsicht.

### Ausführungsformen der Erfindung

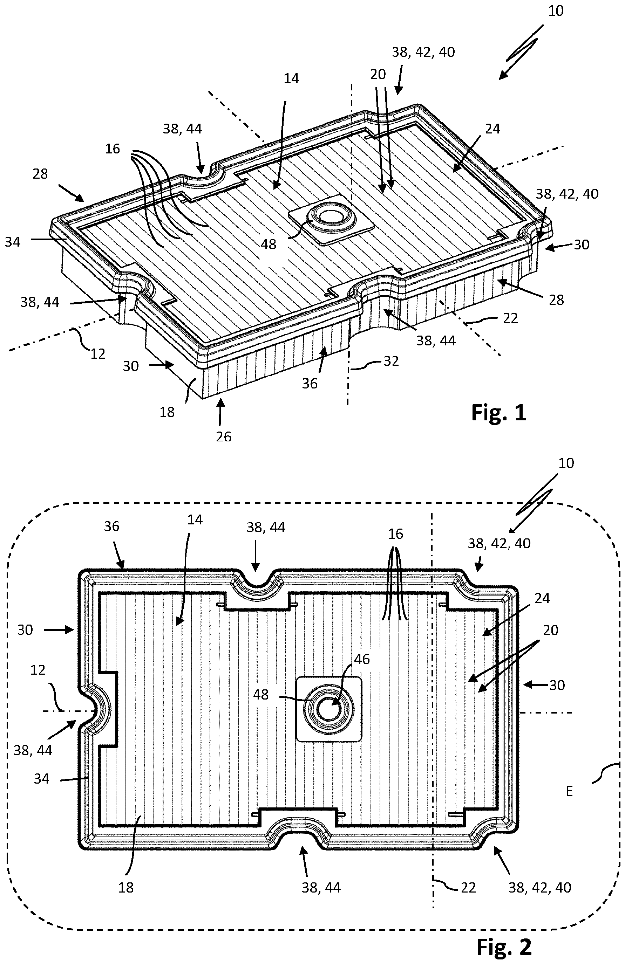

In den **Fign. 1 und 2** ist ein Filterelement **10** gezeigt, das in Form eines sogenannten Platten- oder Flachfilterelements ausgeführt ist. Die Längsachse des Filterelements 10 ist mit **12** bezeichnet. Das Filterelement 10 kann insbesondere als ein Luftfilterelement zum Filtern von Luft für einen Verbrennungsmotor oder auch als ein Innenraumluftfilter eines Kraftfahrzeugs ausgeführt sein. Andere technische Einsatzbereiche sind vorstellbar. Das Flachfilterelement 10 weist einen Filterkörper **14** auf, der durch ein entlang von Falzen **16** zickzackförmig gefaltetes Filtermedium **18** gebildet ist. Die Falten **20** des Filtermediums 18 erstrecken sich jeweils entlang einer zur Längsachse 12 des Filterelements orthogonal verlaufenden Faltenrichtung **22.**

Das Filtermedium 18 kann je nach Einsatzbereich des Filterelements 10 beispielsweise aus einem Zellulosematerial oder einem anderen geeigneten Material bestehen. Das Filtermedium 18 kann je nach Einsatzbereich ein- oder mehrlagig aufgebaut sein. Das Filtermedium kann bedarfsweise mit einer Beschichtung (nicht gezeigt) versehen sein.

Das Filterelement 10 weist eine Oberseite **24** und eine Unterseite **26,** einander jeweils paarweise gegenüberliegend angeordnete Längsseiten **28** und einander paarweise gegenüberliegend angeordnete Stirnseiten **30** auf. Im Betriebseinsatz ist das Filtermedium 18 von dem jeweilig zu filternden Fluid in Richtung der mit **32** bezeichneten Strömungsachse durchströmbar.

Am Filterkörper 14 ist eine umlaufende Dichtung **34** angeordnet. Die Dichtung 34 kann am Filterkörper 14 beispielsweise angeklebt, angeschweißt, angeschäumt oder angespritzt sein. Die Dichtung 34 besteht bevorzugt aus einem gummielastisch verformbaren Material, wie beispielsweise PUR (Polyurethan). Es versteht sich, dass die Dichtung 34 zwecks eines ausreichenden Dichtsitzes an jeweiligen Dichtflächen eines zur Aufnahme des Filterelements 10 vorgesehenen Filtergehäuses auch eine andere Formgebung aufweisen kann und beispielsweise mit zumindest einer oder mehreren radial und/oder auskragenden Dichtlippe(n) versehen sein kann.

Das Filterelement 10 bzw. der Filterkörper 14 weist gemäß den Figuren 1 und 2 eine von der streng rechteckigen Grundform abweichende Außenkontur **36** mit mehreren Rücksprüngen **38** auf. Im Eckbereich **40** des Filterelements 10 ist hier ein jeweiliger Rücksprung 38 als eine, bevorzugt gerundete, Stufe **42** (=stufenförmige Aussparung) ausgebildet. Im Bereich einer Längsseite 28 des Filterelements 10 ist der jeweilige Rücksprung 38 in Form einer, hier beispielhaft gerundeten, Einbuchtung **44** ausgeführt. Ein stirnseitig am Filterkörper ausgebildeter weiterer Rücksprung 38 ist in gleicher Weise als eine Einbuchtung 44 ausgeführt. Es versteht sich, dass die Einbuchtungen 44 auch eine andere Form aufweisen können und beispielsweise eckig ausgeführt sein können. Die Dichtung 34 folgt vorzugsweise der Außenkontur 36 des Filterkörpers 14.

Der Filterkörper 14 kann mit einer Durchgangsausnehmung **46** versehen sein. Diese kann beispielsweise dem Durchgriff eines Befestigungsmittels oder eines anderen Bauteils eines Filtergehäuses (nicht gezeigt) dienen, das zur Aufnahme des Filterelements vorgesehen ist. Im Bereich der Durchgangsausnehmung 46 kann ein Dichtungselement **48** angeordnet sein. Das Dichtungselement 48 kann in einer der Dichtung 34 entsprechenden Weise mit dem Filterkörper 14 bzw. mit dem Filtermedium 18 verschweißt, am Filterkörper 14 bzw. Filtermedium 18 festgeklebt, angespritzt oder angeschäumt sein.

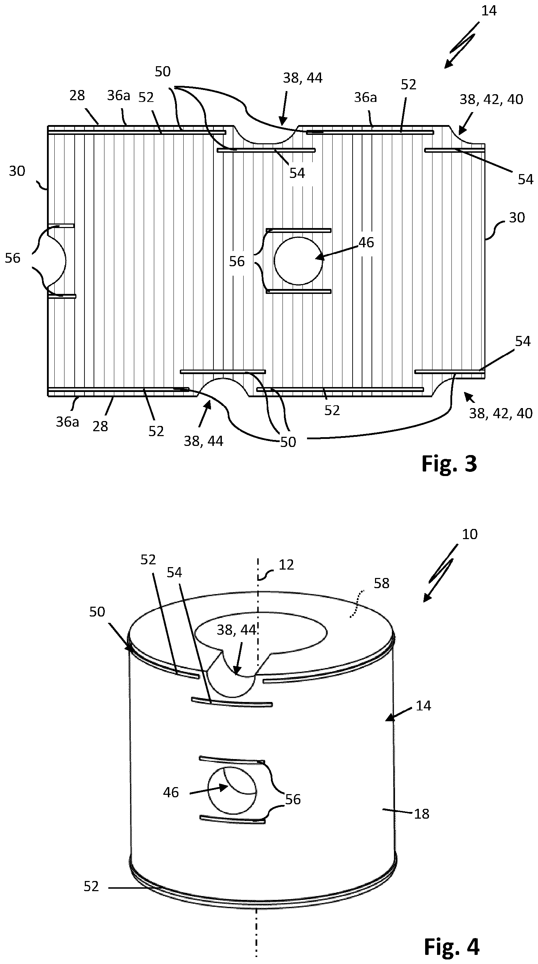

Gemäß der in **Fig. 3** gezeigten freigestellten Ansicht des Filterkörpers 14 weist dieser Bereich seiner beiden Längsseiten 28 eine sogenannte Stirnkantenverklebung **50** auf, die der Abdichtung von Faltenenden des Filtermediums 18 dient. Eine solche Stirnkantenverklebung 50 dient gleichzeitig einer Aussteifung sowie gegenseitigen mechanischen Lagestabilisierung der Falten 20 des Filtermediums 18. Zu beachten ist, dass die Stirnkantenverklebung im Bereich eines jeweiligen Rücksprungs 38 der Außenkontur 36 des Filterkörpers 14 diskontinuierlich ausgeführt aus. Die Stirnkantenverklebung erstreckt sich hier nicht von einer Stirnseite 30 des Filterkörpers 14 zur anderen.

Die Stirnkantenverklebung 50 erstreckt sich im Bereich der Längsseiten 28 entlang eines insbesondere geradlinig und - bezogen auf die Längsachse 12 - parallel verlaufenden Außenkonturabschnitts **36a** des Filterkörpers 14. Die Stirnkantenverklebung 50 weist ein der Außenkontur 36, insbesondere dem Außenkonturabschnitt 36a des Filterkörpers 14 in Längsrichtung 12 (hier quer zur Faltenrichtung 22) folgend, und insbesondere zum Außenkonturabschnitt 36a beabstandet verlaufend, insbesondere parallel verlaufend, angeordnetes äußeres erstes Verklebungssegment **52** auf. Das erste Verklebungssegment 52 ist in der Projektion auf die Ebene E bevorzugt linear verlaufend ausgeführt. Zu beachten ist, dass das erste Verklebungssegment 52 sich vorzugsweise bis zum oder nahezu bis zum Rücksprung 38 der Außenkontur 36 erstreckt. Das Verklebungssegment 52 ist somit bezogen auf den Rücksprung 38 diskontinuierlich hinsichtlich der Außenkontur 36 ausgebildet. Im Bereich des Rücksprungs 38 sind die zum Rücksprung 38 hinverlaufenden Falten 20 zumindest teilweise, bevorzugt vollständig, durch ein zweites Verklebungssegment 54 abgedichtet. Das zweite Verklebungssegment 54 ist in Faltenrichtung relativ zum ersten Verklebungssegment 52 nach innen, d. h. zur jeweilig anderen Längsseite 28 hin, versetzt angeordnet. Das zweite Verklebungssegment 54 ist in Querrichtung zur Faltenrichtung zum ersten Verklebungssegment 52 beabstandet angeordnet. Die beiden Verklebungssegmente 52, 54 verkleben mindestens eine gemeinsame Falte 20. Das erste bzw. die ersten Verklebungssegment(e) 52 und das jeweilig zugeordnete zweite Verklebungssegment 54 können zur Außenkontur des Filterkörpers vorzugsweise jeweils einheitlich beabstandet angeordnet sein.

Im Bereich der Durchgangsausnehmung 46 sind die von der Durchgangsausnehmung 46 jeweilig durchgriffenen Falten 20 des Filterkörpers zur Durchgangsausnehmung hin in durch eine jeweilige Verklebung **56** abgedichtet. Dies gilt gleichermaßen für diejenigen Falten 20 des Filterkörpers 14, die im Bereich einer Stirnseite 30 des Filterkörpers 14 von einem Rücksprung 38 durchgriffen sind. Auch die Verklebungen 56 sind in ihrer Projektion auf die durch den Filterkörper aufgespannten Ebene E jeweils linear und streng axial verlaufend ausgeführt.

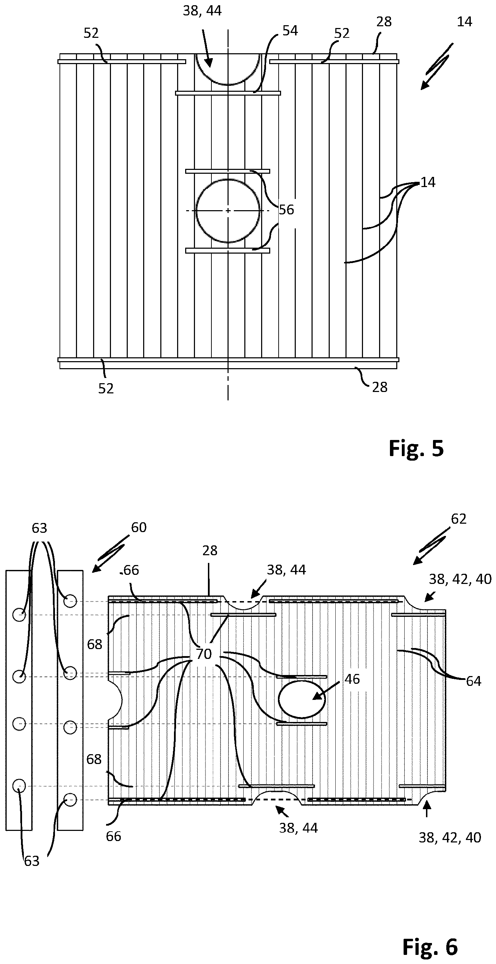

In **Fig. 4** ist ein weiteres Ausführungsbeispiel eines erfindungsgemäßen Filterelements 10 gezeigt, das in Form eines sogenannten Rundfilterelements ausgebildet ist. Das Filterelement 10 weist einen zur Längsachse 12 des Filterelements 10 ringförmig angeordneten Filterkörper 14 aus einem zickzackförmig gefalteten Filtermedium 18 auf. Der Filterkörper 14 umgreift mithin die Längsachse 12 des Filterelements vollumfänglich in einer zur Längsachse 12 radialen Richtung. Der Filterkörper 14 ist bei dieser Bauform von dem zu filternden Fluid in einer zur Längsachse 12 radialen Richtung, bevorzugt von außen nach innen, durchströmbar. Das Filtermedium 18 kann bedarfsweise in axialer Richtung zwischen zwei Endscheiben **58** gehalten angeordnet sein. In diesem Fall kann das Filtermedium 18 mit den Endscheiben 58 verklebt, verschweißt oder im Material der Endscheiben 58 eingebettet gehalten angeordnet sein. Die Stirnkantenverklebung 50 ist auch hier im Bereich des gezeigten und beispielhaft als eine Einbuchtung ausgebildeten Rücksprungs 38 der Außenkontur 36 des Filtermediums 18 bzw. Filterkörpers 14 diskontinuierlich ausgeführt. In **Fig. 5** ist das Filtermedium 18 im abgewickelten aber noch gefalteten Zustand wiedergegeben. Die in Umfangsrichtung verlaufenden und in Verlaufsrichtung der Falten 20 zueinander versetzt angeordneten ersten und zweiten Verklebungssegmente 52, 54 der Stirnkantenverklebung 50 im Bereich des gezeigten Rücksprungs 38 der Außenkontur 36 des Filtermediums 18 sind gut zu erkennen.

Zur Herstellung eines vorstehend im Zusammenhang mit den Figuren 1 bis 4 gezeigten Filterelements dient eine in **Fig. 6** stark schematisiert und nur ausschnittsweise dargestellte Klebstoffauftragsvorrichtung **60.** Die Klebstoffauftragsvorrichtung 60 ermöglicht den gezielten Auftrag von Klebstoff auf einem Filtermediumzuschnitt **62,** aus dem der jeweilige Filterkörper 14 des als Plattenfilterelement bzw. Rundfilterelement ausgebildeten Filterelements gebildet wird. Der Filtermediumzuschnitt 62 entspricht mithin dem jeweiligen Filtermedium 18 des Filterelements im abgewickelten Zustand. Die Klebstoffauftragsvorrichtung weist mehrere Düsen **63** auf, die einem für die Stirnkantenverklebung und die Verklebung der zu bildenden Falten 20 des Filtermediums erforderlichen gezielten Klebstoffauftrag auf dem Filtermediumzuschnitt 62 dienen.

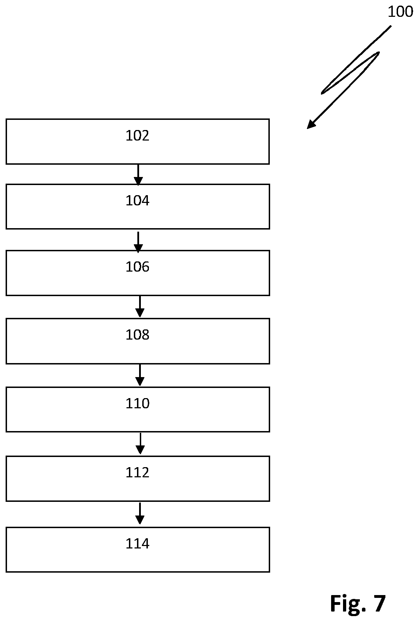

Nachstehend wird das erfindungsgemäßen Herstellungsverfahren 100 für ein vorstehend dargestelltes Filterelement 10 unter zusätzlicher Bezugnahme auf die **Fig. 7** erläutert. In einem ersten Schritt **102** wird der Filtermediumzuschnitt 62 bereitgestellt, der entlang von vorgegebenen Falzlinien **64,** die sich von einer ersten Längsseite 28 zu einer gegenüberliegend angeordneten zweiten Längsseite 28 des Filtermediumzuschnitts 62 erstrecken, zickzackförmig zu falten ist. Die Falzlinien 64 können bei Bedarf in das Material des Filtermediumzuschnitts 62 eingeprägt sein.

In einem weiteren Schritt **104** wird zumindest ein Rücksprung 38 im Bereich einer der beiden Längsseiten 28 oder eines Eckbereichs 40 des Filtermediumzuschnitts 62 erzeugt, insbesondere ausgestanzt.

In einem weiteren Schritt **106** wird entlang beider Längsseiten 28 des Filtermediumzuschnitts 62 eine erste lineare Klebstoffauftragsbahn 66 definiert bzw. vorgegebenen, wobei die beiden ersten Klebstoffauftragsbahnen 66 zueinander parallel verlaufend angeordnet sind und zumindest eine der beiden Klebstoffauftragsbahnen 66 den Rücksprung 38 schneidet.

In einem weiteren Schritt **108** wird eine zweite lineare Klebstoffauftragsbahn **68** entlang der den Rücksprung 38 aufweisenden Längsseite 28 des Filtermediumzuschnitts 62 definiert, wobei die zweite Klebstoffauftragsbahn 68 zwischen den beiden ersten Klebstoffauftragsbahnen und zu diesen beabstandet verlaufend angeordnet ist, ohne dabei den Rücksprung 38 zu schneiden.

In einem nachfolgenden Schritt **110** wird Klebstoff **70** auf dem Filtermediumzuschnitt 62 entlang der beiden ersten Klebstoffauftragsbahnen 66 aufgetragen, wobei der Klebstoffauftrag entlang der ersten Klebstoffauftragsbahn 66 der Außenkontur des Filtermedienzuschnitts 62 quer zur Faltenrichtung folgt und im Bereich des zumindest einen Rücksprungs 38 unterbrochen oder abgebrochen und stattdessen Klebstoff entlang der zweiten Klebstoffauftragsbahn 68 auf dem Filtermediumzuschnitt 62 aufgetragen wird, derart, dass der Klebstoffauftrag entlang der zweiten Klebstoffauftragsbahn 68 in Querrichtung zur Faltenrichtung zur ersten Klebstoffauftragsbahn 66 beabstandet aufgetragen wird und wobei die beiden Klebstoffauftragsbahnen 66, 68 mindestens eine gemeinsame Falte des Filtermediumzuschnitts 62 verkleben.

In einem nachfolgenden Schritt **112** wird der Filtermediumzuschnitt 62 unter Bildung des Filterkörpers 14 zickzackförmig gefaltet, sodass die Faltenenden des Filterkörpers 14 bzw. des Filtermediums 18 mittels der durch den abgebundenen Klebstoff 70 gebildeten Stirnkantenverklebung 50 abgedichtet sind.

In einem weiteren Schritt **114** wird die Dichtung 34 am Filterkörper 14 angebracht. Dies kann im Wege des Klebens, des Schweißens, oder durch Anspritzen oder Anschäumen der Dichtung 34 am Filterkörper 14 erfolgen.

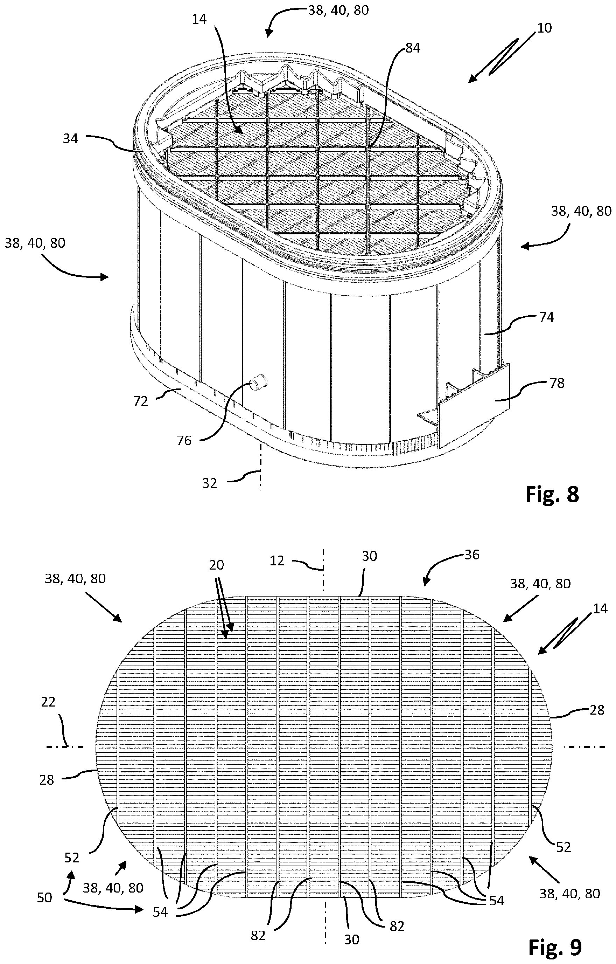

**Fig. 8** zeigt ein nicht erfindungsgemäßes Filterelement 10, das in der Draufsicht im Wesentlichen oval ausgebildet ist. Genauer gesagt ist der Querschnitt des Filterelements 10 stadionförmig mit zwei abgerundeten und zwei parallelen Seiten. Ein Filterkörper 14 des Filterelements 10 ist in **Fig. 9** gezeigt. Der Filterkörper 14 weist eine Vielzahl von in Längsrichtung 12 aufeinanderfolgenden Falten 20 auf. Das Filterelement 10 ist in Richtung einer Strömungssachse 32 (in Fig. 8 von unten nach oben) durchströmbar. Reinseitig ist eine umlaufende Dichtung 34 an dem Filterkörper 14 angebracht. Im eingebauten Zustand dichtet die Dichtung 34 das Filterelement 10 gegenüber einem nicht näher dargestellten Filtergehäuse ab. Rohseitig kann der Filterkörper 14 von einer umlaufenden Einfassung **72** eingefasst sein. Die Einfassung 72 kann zur rohseitigen Abdichtung und Stabilisierung bzw. Schutz des Filterkörpers 14 dienen. Eine Mantelfläche des Filterkörpers 14 kann von einer Hülle **74** umgeben sein. Die Hülle 74 kann in die Dichtung 34 eingreifen; insbesondere kann die Hülle 74 einen Abschnitt aufweisen, der als Dichtungsträger dient. Die Hülle 74 kann beidseits Elemente **76** zum Unterstützen der Positionierung des Filterelements 10 in dem Filtergehäuse aufweisen. Das Element 76 kann in Form eines runden Pins ausgebildet sein. Weiterhin kann die Hülle 74 ein Griffelement 78 zum Ergreifen des Filterelements 10 aufweisen.

Der Filterkörper 14 ist vorliegend oval mit zwei parallelen Seiten ausgebildet. In Eckbereichen 40 weist der Filterkörper 14 Rücksprünge 38 in Form von konvexen Abrundungen **80** auf.

An Längsseiten 28 der Außenkontur 36 verlaufen erste Verklebungssegmente 52 einer Stirnkantenverklebung 50. Die ersten Verklebungssegmente 52 erstrecken sich in Längsrichtung 12 bzw. quer zur Faltenrichtung 22 und folgen der Kontur der Längsseiten 28 in einem veränderlichen Abstand. Die ersten Verklebungssegmente 52 sind hier durchgängig ausgebildet und erstrecken sich jeweils zwischen zwei in Längsrichtung 12 gegenüberliegenden Rücksprüngen 38.

In Faltenrichtung 22 innerhalb der beiden ersten Verklebungssegmente 52 weist der Filterkörper mehrere zweite Verklebungssegmente 54 auf. Auch die zweiten Verklebungssegmente 54 können sich durchgängig zwischen einander in Längsrichtung 12 gegenüberliegenden Rücksprüngen 38 bzw. Stirnseiten 30 erstrecken.

In Faltenrichtung 22 innerhalb der (innersten) zweiten Verklebungssegmente 54 kann der Filterkörper 14 ein oder mehrere dritte Verklebungssegmente **82** aufweisen. Die dritten Verklebungssegmente 82 können sich durchgängig zwischen einander in Längsrichtung 12 gegenüberliegenden Stirnseiten 30 erstrecken.

Die ersten, zweiten und dritten Verklebungssegmente 52, 54, 82 sind hier jeweils geradlinig und parallel zueinander ausgebildet. Insbesondere die ersten Verklebungssegmente 52 könnten auch wie die Außenkontur 36 gekrümmt sein (nicht näher dargestellt). Durch den in Längsrichtung 12 (hier quer zur Faltenrichtung 22) durchgehenden Verlauf insbesondere der zweiten und dritten Verklebungssegmente 54, 82 wird der Filterkörper 14 stabilisiert. Ferner bewirken die durchgehenden Verklebungssegmente 52, 54, 82 eine Führung des Luftstroms parallel zur Strömungsachse 32.

Die Verklebungssegmente 52, 54, 82 sind jeweils voneinander beabstandet. Mit anderen Worten berühren benachbarte Verklebungssegmente 52, 54, 82 einander nicht. Insofern sind die Verklebungssegmente 52, 54, 82 der Stirnkantenverklebung 50 zueinander diskontinuierlich.

Paarweise benachbarte erste und zweite Verklebungssegmente 52, 54 verkleben jeweils wenigstens eine gemeinsame Falte. Aufgrund des durchgängigen Verlaufs verkleben paarweise benachbarte erste und zweite Verklebungssegmente 52, 54 hier jeweils alle Falten 20 im Bereich der Erstreckung des jeweils kürzeren Verklebungssegments.

Insbesondere im Bereich der Rücksprünge 38 erstreckt sich die Dichtung 34 von der Außenkontur 36 bzw. von den Stirnseiten 30 her quer zur Faltenrichtung 22 ein Stück weit nach innen. Die Dichtung 34 überdeckt dabei je wenigstens eine Falte 20, die von benachbarten ersten bzw. zweiten Verklebungssegmenten 52, 54 gemeinsam verklebt ist. Mit anderen Worten werden zur Ausbildung des Rücksprungs 38 beschnittene Enden von Falten 20 von der Dichtung 34 überdeckt. Die Dichtung 34 ragt über die in Längsrichtung 12 (in Querrichtung zur Faltenrichtung 22) am weitesten innen liegende, gemeinsam von einem Paar von ersten bzw. zweiten Verklebungssegmenten 52, 54 verklebte Falte 20 nach innen. Die Dichtung 34 kann im Bereich der Rücknehmungen 38 innenseitig einen gestuften Verlauf aufweisen.

Eine Gitterstruktur **84** kann das Filterelement 10 und insbesondere die Dichtung 34 zusätzlich stabilisieren. Die Gitterstruktur 84 kann in die Dichtung 34 eingreifen und auch diese stabilisieren.

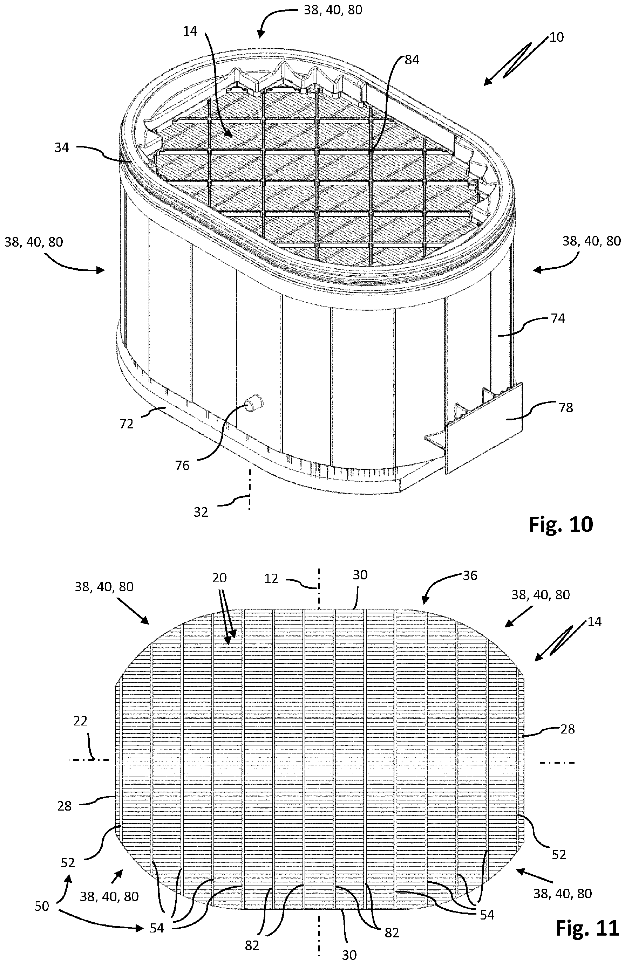

**Fig. 10** zeigt ein weiteres nicht erfindungsgemäßes Filterelement 10 mit einem in **Fig. 11** dargestellten Filterkörper 14, die in ihrem Aufbau jeweils weitgehend dem Filterelement 10 von Fig. 8 bzw. dem Filterkörper von Fig. 9 entsprechen. Bei der in den Figuren 10 und 11 gezeigten Ausführungsform verlaufen Längsseiten 28 des Filterkörpers 14 geradlinig. Die ersten Verklebungssegmente 52 erstrecken sich parallel zu den geradlinigen Längsseiten 28. Auch die Einfassung 72 weist im Bereich der Längsseiten 28 einen geradlinigen Verlauf auf. Die Dichtung 34 sowie die Hülle 74 können demgegenüber oval, mithin auch im Bereich der Längsseiten 28 abgerundet, ausgebildet sein. Insbesondere kann die Dichtung 34 von den ersten Verklebungssegmenten 52 jeweils in Faltenrichtung 22 über die Außenkontur 36 des Filterkörpers 14 vorstehen. Im Übrigen sei auf die vorangegangene Beschreibung verwiesen.

## Patentansprüche

1. Filterelement (10) zum Filtern eines Fluids, insbesondere Luft, mit einem Filterkörper (14) mit einem zickzackförmig gefalteten Filtermedium (18), dessen Falten (20) sich in einer Faltenrichtung (22) erstrecken und das zur Abdichtung seiner Faltenenden mit einer Stirnkantenverklebung (50) versehen ist, die im Bereich mindestens eines Rücksprungs (38) der Außenkontur (36) des Filterkörpers (14) diskontinuierlich ausgeführt ist und zumindest ein außenliegend angeordnetes erstes Verklebungssegment (52) aufweist, und ein in Faltenrichtung (22) innenliegendes zweites Verklebungssegment (54) umfasst, wobei das zweite Verklebungssegment (54) in Querrichtung zur Faltenrichtung zum ersten Verklebungssegment (52) beabstandet angeordnet ist und wobei die beiden Verklebungssegmente (52, 54) mindestens eine gemeinsame Falte (20) verkleben.

2. Filterelement nach Anspruch 1, **dadurch gekennzeichnet, dass** das erste Verklebungssegment (52) der Außenkontur des Filterkörpers (14) in Querrichtung zur Faltenrichtung (22) folgt, insbesondere geradlinig folgt.

3. Filterelement nach Anspruch 1 oder 2, wobei das erste Verklebungssegment (52) zu dem Rücksprung (38) diskontinuierlich ausgebildet ist.

4. Filterelement nach einem der vorhergehenden Ansprüche, wobei das zweite Verklebungssegment (54) diskontinuierlich ausgebildet ist.

5. Filterelement nach Anspruch 1 oder 2, wobei das erste Verklebungssegment (52) und/oder das zweite Verklebungssegment (54) in Querrichtung zur Faltenrichtung (22) durchgängig ausgebildet sind.

6. Filterelement nach einem der vorhergehenden Ansprüche, **dadurch gekennzeichnet, dass** das zweite Verklebungssegment (54) in Querrichtung zur Faltenrichtung (22), insbesondere geradlinig, verläuft.

7. Filterelement nach einem der vorhergehenden Ansprüche, **dadurch gekennzeichnet, dass** das zweite Verklebungssegment (54), das in Querrichtung zur Faltenrichtung zum ersten Verklebungssegment (52) beabstandet angeordnet ist, wenigstens mit der Außenkontur des jeweiligen Rücksprungs (38) beginnt und endet oder zu dieser beabstandet beginnt und endet.

8. Filterelement nach einem der vorhergehenden Ansprüche, **dadurch gekennzeichnet, dass** der Rücksprung (38) der Außenkontur (36) in einem Eckbereich (40) des Filterkörpers (14) angeordnet ist.

9. Filterelement nach einem der vorhergehenden Ansprüche, **dadurch gekennzeichnet, dass** das Filtermedium (18) eine Durchgangsausnehmung (46) aufweist, wobei die Falten (20) des Filterkörpers (14) beiderseitig der Durchgangsausnehmung (46) zur Durchgangsausnehmung (46) hin durch eine Verklebung (56) abgedichtet sind.

10. Filterelement nach einem der vorhergehenden Ansprüche, **dadurch gekennzeichnet, dass** die Außenkontur (36) des Filterkörpers (14) zumindest bereichsweise gekrümmt verläuft, insbesondere konvex gekrümmt.

11. Filterelement nach einem der vorhergehenden Ansprüche, **dadurch gekennzeichnet, dass** die Stirnkantenverklebung (50) mehrere voneinander beabstandete zweite Verklebungssegmente (54) umfasst, wobei benachbarte zweite Verklebungssegmente (54) je mindestens eine gemeinsame Falte (20) verkleben.

12. Filterelement nach einem der vorhergehenden Ansprüche, **dadurch gekennzeichnet, dass** das Filterelement (10) als ein Flachfilterelement oder als ein Rundfilterelement ausgeführt ist.

13. Filterelement nach einem der vorhergehenden Ansprüche, **dadurch gekennzeichnet, dass** eine, vorzugsweise reinseitige, Dichtung (34) des Filterelements (10) im Bereich des Rücksprungs (38) von der Außenkontur (36) her quer zur Faltenrichtung (22) wenigstens eine Falte (20) überdeckt, die sowohl von dem ersten Verklebungssegment (52) als auch von dem zweiten Verklebungssegment (54) verklebt ist.

14. Verfahren zum Herstellen eines Filterelements (10) nach einem der vorhergehenden Ansprüche, umfassend die folgenden Schritte:
a) Bereitstellen (102) eines Filtermediumzuschnitts (62), der zur Bildung des Filterkörpers (14) entlang von vorgegebenen Falzlinien (64), die sich von einer ersten Längsseite des Filtermediumzuschnitts (62) zu einer gegenüberliegend angeordneten zweiten Längsseite (28) erstrecken, zickzackförmig zu falten ist;
b) Erzeugen (104) zumindest eines Rücksprungs (38) im Bereich mindestens einer der beiden Längsseiten (28) des Filtermediumzuschnitts (62);
c) Definieren (106) von jeweils einer ersten linearen Klebstoffauftragsbahn (66) entlang einer jeden der beiden Längsseiten (28) des Filtermediumzuschnitts (62), wobei die beiden Klebstoffauftragsbahnen (66) zueinander beabstandet verlaufend angeordnet sind und eine der beiden Klebstoffauftragsbahnen (66) den zumindest einen Rücksprung (38) schneidet;
d) Definieren (108) mindestens einer zweiten linearen Klebstoffauftragsbahn (68) entlang der den Rücksprung aufweisenden Längsseite (28) des Filtermediumzuschnitts (62), wobei die zweite Klebstoffauftragsbahn (68) zwischen den beiden ersten Klebstoffauftragsbahnen (66) und zu diesen parallel verlaufend angeordnet ist, ohne den Rücksprung (38) zu schneiden;
e) Auftragen (110) von Klebstoff auf dem Filtermediumzuschnitt (62) entlang der beiden ersten Klebstoffauftragsbahnen (66), wobei der Klebstoffauftrag entlang der ersten Klebstoffauftragsbahn (66) der Außenkontur des Filtermediumzuschnitts (62) in Querrichtung zur Faltenrichtung folgt und im Bereich des zumindest einen Rücksprungs (38) unterbrochen oder abgebrochen und stattdessen Klebstoff entlang der zweiten Klebstoffauftragsbahn (68) auf dem Filtermediumzuschnitt (62) aufgetragen wird, derart, dass der Klebstoffauftrag entlang der zweiten Klebstoffauftragsbahn (68) in Querrichtung zur Faltenrichtung zur ersten Klebstoffauftragsbahn (66) beabstandet aufgetragen wird und wobei die beiden Klebstoffauftragsbahnen (66, 68) mindestens eine gemeinsame Falte des Filtermediumzuschnitts (62) verkleben; und
f) Aufstellen des Filtermediumzuschnitts (62) zu einem zickzackförmig gefalteten Filtermedium (18), sodass die Faltenenden des Filtermediums (18) mittels der durch den Klebstoffauftrag gebildeten Stirnkantenverklebung (50) abgedichtet sind.

15. Verfahren nach Anspruch 14, **dadurch gekennzeichnet, dass** der Filtermediumzuschnitt (62) mit einer Durchgangsausnehmung (46) versehen wird, wobei auf dem Filtermediumzuschnitt (62) entlang zweier zueinander parallel verlaufender linearer dritter Klebstoffauftragsbahnen zu beiden Seiten der Durchgangsausnehmung (46) Klebstoff aufgetragen wird, derart, dass die zur Durchgangsausnehmung hin verlaufenden Falten nach dem Aufstellen des Filtermediumzuschnitts (62) mittels der durch den Klebstoffauftrag gebildeten Verklebung (56) abgedichtet sind.

## Claims

1. A filter element (10) for filtering a fluid, in particular air, having a filter body (14) with a zigzag-folded filter medium (18), the folds (20) of which extend in a folding direction (22) and which is provided with a front end edge bonding (50) for sealing its fold ends, which is designed discontinuously in the area of at least one recess (38) of the outer contour (36) of the filter body (14) and features at least one first bonding segment (52) arranged on the outside, and comprises a second bonding segment (54) arranged on the inside in the folding direction (22), wherein the second bonding segment (54) is disposed apart from the first bonding segment (52) in transverse direction to the folding direction, and wherein the two bonding segments (52, 54) bond at least one common fold (20).

2. The filter element according to claim 1, **characterized in that** the first bonding segment (52) follows the outer contour of the filter body (14) in transverse direction to the folding direction (22), in particular follows it in a straight line.

3. The filter element according to claim 1 or 2, wherein the first bonding segment (52) is designed discontinuously with respect to the recess (38).

4. The filter element according to one of the preceding claims, wherein the second bonding segment (54) is designed discontinuously.

5. The filter element according to claim 1 or 2, wherein the first bonding segment (52) and/or the second bonding segment (54) are designed continuously in transverse direction with respect to the folding direction (22).

6. The filter element according to one of the preceding claims, **characterized in that** the second bonding segment (54) extends in transverse direction with respect to the folding direction (22), in particular in a straight line.

7. The filter element according to one of the preceding claims, **characterized in that** the second bonding segment (54), which is disposed apart from the first bonding segment (52) in transverse direction with respect to the folding direction, begins and ends at least with the outer contour of the respective recess (38) or begins and ends spaced apart therefrom.

8. The filter element according to one of the preceding claims, **characterized in that** the recess (38) of the outer contour (36) is disposed in a corner area (40) of the filter body (14).

9. The filter element according to one of the preceding claims, **characterized in that** the filter medium (18) features a passage recess (46), wherein the folds (20) of the filter body (14) are sealed on both sides of the passage recess (46) towards the passage recess (46) by an adhesive bond (56).

10. The filter element according to one of the preceding claims, **characterized in that** the outer contour (36) of the filter body (14) is curved at least in some areas, in particular convexly curved.

11. The filter element according to one of the preceding claims, **characterized in that** the front end edge bonding (50) comprises a plurality of second bonding segments (54) spaced apart from each other, wherein adjacent second bonding segments (54) each bond at least one common fold (20).

12. The filter element according to one of the preceding claims, **characterized in that** the filter element (10) is designed as flat filter element or as round filter element.

13. The filter element according to one of the preceding claims, **characterized in that** a seal (34), preferably on the clean side, of the filter element (10) covers, in the area of the recess (38), from the outer contour (36), in transverse direction to the folding direction (22), at least one fold (20), which is bonded both by the first bonding segment (52) and by the second bonding segment (54).

14. A method of manufacturing a filter element (10) according to one of the preceding claims, comprising the following steps:
a) Providing (102) a filter medium blank (62), which is to be folded in a zigzag manner along predetermined fold lines (64) extending from a first longitudinal side of the filter medium blank (62) to an oppositely disposed second longitudinal side (28), in order to form the filter body (14);
b) Creating (104) at least one recess (38) in the area of at least one of the two longitudinal sides (28) of the filter medium blank (62);
c) Defining (106) a respective first linear adhesive application path (66) along each of the two longitudinal sides (28) of the filter medium blank (62), wherein the two adhesive application paths (66) are disposed to extend mutually spaced and one of the two adhesive application paths (66) intersects the at least one recess (38);
d) Defining (108) at least one second linear adhesive application path (68) along the longitudinal side (28) of the filter medium blank (62) featuring the recess, wherein the second adhesive application path (68) is disposed between the two first adhesive application paths (66) and extending parallel thereto without intersecting the recess (38);
e) Applying (110) adhesive to the filter medium blank (62) along the two first adhesive application paths (66), wherein the adhesive application along the first adhesive application path (66) follows the outer contour of the filter medium blank (62) in the transverse direction to the folding direction and is interrupted or broken off in the area of the at least one recess (38) and instead adhesive is applied along the second adhesive application path (68) on the filter medium blank (62) in such a way that the adhesive application along the second adhesive application path (68) is applied apart from the first adhesive application path (66) in the transverse direction to the folding direction, and wherein the two adhesive application paths (66, 68) bond at least one common fold of the filter medium blank (62); and
f) Erecting the filter medium blank (62) to form a zigzag-folded filter medium (18), so that the fold ends of the filter medium (18) are sealed using the front end edge bonding (50) formed by the adhesive application.

15. The method according to claim 14, **characterized in that** the filter medium blank (62) is provided with a passage recess (46), wherein adhesive is applied to the filter medium blank (62) along two linear third adhesive application paths running parallel to one another on both sides of the passage recess (46) in such a way that the folds running towards the passage recess are sealed after the filter medium blank (62) has been erected using the bonding (56) formed by the adhesive bond.

## Revendications

1. Elément filtrant (10) pour filtrer un fluide, notamment de l'air, ayant un corps de filtre (14) avec un milieu filtrant (18) plié en accordéon, dont les plis (20) s'étendent dans une direction de pliage (22) et qui est pourvu d'un collage d'arête frontale (50) pour assurer l'étanchéité de ses extrémités de plis et qui est réalisé de manière discontinue dans la zone d'au moins un retrait (38) du contour extérieur (36) du corps de filtre (14) et présente au moins un premier segment de collage (52) disposé à l'extérieur, et comprend un second segment de collage (54) disposé à l'intérieur dans la direction des plis (22), le second segment de collage (54) étant disposé à une certaine distance du premier segment de collage (52) dans la direction transversale par rapport à la direction de pliage, et les deux segments de collage (52, 54) adhérant au moins un pli commun (20).

2. Elément filtrant selon la revendication 1, **caractérisé en ce que** le premier segment de collage (52) suit le contour extérieur du corps de filtre (14) dans la direction transversale par rapport à la direction de pliage (22), notamment en suivant une ligne droite.

3. Elément filtrant selon la revendication 1 ou 2, le premier segment de collage (52) étant réalisé de manière discontinue par rapport au retrait (38).

4. Elément filtrant selon l'une quelconque des revendications précédentes, le second segment de collage (54) étant réalisé de manière discontinue.

5. Elément filtrant selon la revendication 1 ou 2, le premier segment de collage (52) et/ou le second segment de collage (54) étant réalisés de manière continue dans la direction transversale par rapport à la direction de pliage (22).

6. Elément filtrant selon l'une quelconque des revendications précédentes, **caractérisé en ce que** le second segment de collage (54) s'étend dans la direction transversale par rapport à la direction de pliage (22), notamment de manière rectiligne.

7. Elément filtrant selon l'une quelconque des revendications précédentes, **caractérisé en ce que** le second segment de collage (54), qui est disposé à distance du premier segment de collage (52) dans la direction transversale par rapport à la direction de pliage, commence et se termine au moins avec le contour extérieur de la partie en retrait respective (38) ou commence et se termine à distance de celui-ci.

8. Elément filtrant selon l'une quelconque des revendications précédentes, **caractérisé en ce que** le retrait (38) du contour extérieur (36) est disposé dans une section de coin (40) du corps de filtre (14).

9. Elément filtrant selon l'une quelconque des revendications précédentes, **caractérisé en ce que** le milieu filtrant (18) présente un évidement de passage (46), les plis (20) du corps de filtre (14) étant rendus étanches par un collage (56) de part et d'autre de l'évidement de passage (46) vers l'évidement de passage (46).

10. Elément filtrant selon l'une quelconque des revendications précédentes, **caractérisé en ce que** le contour extérieur (36) du corps de filtre (14) s'étend de manière incurvée au moins par sections, notamment de manière incurvée convexe.

11. Elément filtrant selon l'une quelconque des revendications précédentes, **caractérisé en ce que** le collage d'arête frontale (50) comprend plusieurs seconds segments de collage (54) espacés les uns des autres, des seconds segments de collage (54) voisins collant chacun au moins un pli commun (20).

12. Elément filtrant selon l'une quelconque des revendications précédentes, **caractérisé en ce que** l'élément filtrant (10) est réalisé en tant qu'élément filtrant plat ou en tant qu'élément filtrant rond.

13. Elément filtrant selon l'une quelconque des revendications précédentes, **caractérisé en ce qu'**un joint (34), de préférence côté pur, de l'élément filtrant (10) recouvre, dans la zone du retrait (38), à partir du contour extérieur (36), transversalement à la direction de pliage (22), au moins un pli (20) qui est collé aussi bien par le premier segment de collage (52) que par le second segment de collage (54).

14. Procédé de fabrication d'un élément filtrant (10) selon l'une quelconque des revendications précédentes, comprenant les étapes suivantes:
a) la mise à disposition (102) d'un flan de milieu filtrant (62) qui doit être plié en accordéon le long de lignes de pliage prédéterminées (64) s'étendant d'un premier côté longitudinal du flan de milieu filtrant (62) à un second côté longitudinal (28) situé à l'opposé pour former le corps de filtre (14);
b) la génération (104) d'au moins un retrait (38) dans la zone d'au moins l'un des deux côtés longitudinaux (28) du flan de milieu filtrant (62);
c) la définition (106) d'une première bande d'application d'adhésif linéaire (66) respective le long de chacun des deux côtés longitudinaux (28) du flan de milieu filtrant (62), les deux bandes d'application d'adhésif (66) étant disposées de manière à s'étendre en étant espacées l'une de l'autre, et l'une des deux bandes d'application d'adhésif (66) coupe le retrait (38), au moins au nombre d'un;
d) la définition (108) d'au moins une seconde bande d'application d'adhésif linéaire (68) le long du côté longitudinal (28) du flan de milieu filtrant (62) présentant le retrait, la seconde bande d'application d'adhésif (68) étant disposée entre les deux premières bandes d'application d'adhésif (66) et s'étendant parallèlement à celles-ci, sans couper le retrait (38);
e) l'application (110) d'adhésif sur le flan de milieu filtrant (62) le long des deux premières bandes d'application d'adhésif (66), l'application d'adhésif le long de la première bande d'application d'adhésif (66) suivant le contour extérieur du flan de milieu filtrant (62) dans la direction transversale par rapport à la direction de pliage et est interrompue ou annulée dans la zone de du retrait (38), au moins au nombre d'un, et, à la place, de l'adhésif est appliqué le long de la seconde bande d'application d'adhésif (68) sur le flan de milieu filtrant (62), de sorte que l'application d'adhésif le long de la seconde bande d'application d'adhésif (68) est appliquée à distance de la première bande d'application d'adhésif (66) dans la direction transversale à la direction de pliage, et les deux bandes d'application d'adhésif (66, 68) collant au moins un pli commun de flan de milieu filtrant (62); et
f) la mise en place du flan de milieu filtrant (62) en un milieu filtrant (18) plié en accordéon, de sorte que les extrémités pliées du milieu filtrant (18) sont rendues étanches par le procédé de collage d'arêtes frontales (50) formé par l'application de l'adhésif.

15. Procédé selon la revendication 14, **caractérisé en ce que** le flan de milieu filtrant (62) est pourvue d'un évidement de passage (46), de l'adhésif étant appliqué sur le flan de milieu filtrant (62) le long de deux troisièmes bandes d'application d'adhésif linéaires parallèles entre elles, de part et d'autre de l'évidement de passage (46), de sorte que les plis s'étendant vers l'évidement de passage sont rendus étanches après la mise en place du flan de milieu filtrant (62) par le collage (56) formé par l'application d'adhésif.
